# EUROPÄISCHE PATENTSCHRIFT

(11) **EP 3 466 019 B1**
(45) Veröffentlichungstag und Bekanntmachung des Hinweises auf die Patenterteilung: **04.11.2020**
(21) Anmeldenummer: 17723676.7
(22) Anmeldetag: 12.05.2017
(51) Int. Cl.: H04L 29/06, H04W 12/08, H04L 29/08

(54) **KRAFTFAHRZEUG-SCHNITTSTELLE MIT UNTERBRECHER**
INTERFACE WITH INTERRUPT FOR A VEHICLE
INTERFACE AVEC UN INTERRUPTEUR POUR UN VEHICULE

(30) Priorität: 24.05.2016 DE 102016208937
(43) Veröffentlichungstag der Anmeldung: 10.04.2019
(73) Patentinhaber: Robert Bosch GmbH, 70442 Stuttgart (DE)
(72) Erfinder: RITTER, Claus, 76337 Waldbronn (DE); HEYL, Andreas, Palo Alto, California 943041223 (US); REICHARDT, Herbert, 73773 Aichwald (DE); DOEHREN, Stefan, 73630 Remshalden-Grunbach (DE)
(86) Internationale Anmeldenummer: PCT/EP2017/061460
(87) Internationale Veröffentlichungsnummer: WO 2017/202627

(56) Entgegenhaltungen:
- EP-A1- 1 675 342
- WO-A1-00/09363
- DE-A1-102014 204 128
- US-A1- 2016 142 410
- FURONG ZHOU ET AL: "Design and implementation of stateful packet inspection firewall based on ForCES architecture", INFORMATION NETWORKING AND AUTOMATION (ICINA), 2010 INTERNATIONAL CONFERENCE ON, IEEE, PISCATAWAY, NJ, USA, 18. Oktober 2010 (2010-10-18), Seiten V1-120, XP031802124, ISBN: 978-1-4244-8104-0

## Beschreibung

Die Erfindung betrifft ein Schnittstelleninterface zum Bereitstellen einer Schnittstelle in einem Kraftfahrzeug, insbesondere zur Kommunikation mit einer Steuerelektronik des Kraftfahrzeugs, die eine sichere Datenkommunikation ermöglicht.

### Stand der Technik

Durch die fortschreitende Vernetzung von Kraftfahrzeugen, insbesondere über das Internet, und die damit steigende Zahl an Anwendungsmöglichkeiten ("Use-Cases") ist eine immer größere Menge an Informationen/Daten aus einem Kraftfahrzeug erforderlich.

Als generischer, herstellerübergreifender Datenzugriffspunkt bietet sich die für abgasrelevante Systeme gesetzlich vorgeschriebene OBD2-Schnittstelle an. Diese wird heute in Werkstätten als primärer Diagnosezugriffspunkt genutzt.

Es sind OBD2-Schnittstelleninterfaces bekannt, die in die OBD2-Buchse des Kraftfahrzeugs eingesteckt werden und eine Schnittstelle zur Verfügung stellen, die eine Diagnosekommunikation mit geeigneter Applikations-Software ermöglicht. Diese Schnittstelle kann als drahtgebundene oder drahtlose Schnittstelle und insbesondere als Funktionsschnittstelle ausgeführt sein. Die Applikations-Software kann auf einem eigens dafür vorgesehenen Diagnosegerät, aber auch auf einem Multifunktionsgerät, wie z.B. einem Mobiltelefon (Smartphone), einem Tablet-Computer oder einem Notebook betrieben werden.

Viele Anwendungen beschränken sich auf das Auslesen von Diagnosedaten aus dem Kraftfahrzeug, welche im Fahrbetrieb und/oder im Stillstand des Kraftfahrzeugs angefordert werden können. Die Anwendungen umfassen in der Regel explizit nicht das Löschen des Fehlerspeichers. Hinsichtlich der funktionalen Sicherheit (in Anlehnung an ISO26262, die auf OBD-Schnittstelleinterfaces nicht unmittelbar anwendbar ist) sind daher keine besonderen Sicherheitsanforderungen zu beachten.

Bei komplexeren Anwendungen werden jedoch auch höhere funktionale Sicherheitsanforderungen (analog der ASIL Level) erreicht, die dementsprechend abgesichert werden müssen. Beispielsweise wäre ein unbeabsichtigtes Ansteuern, z.B. durch eine Fehlfunktion der Software und/oder eine Fehlbedienung eines Benutzers, eines ESP-Systems, welches die Bremse ansteuert, in verschiedenen Fahrsituationen sehr gefährlich.

Aus dem Stand der Technik sind als mögliche technische Lösungen der Einsatz eines Brandmauergeräts, im Englischen als Firewall bezeichnet und in der Druckschrift WO00/09363 beschrieben, bekannt. Als Literatur zu elektronischen Schnittstellen im Kraftfahrzeug wird die Druckschrift DE102014204128-A1 und US2016/0142410-A1 genannt.

Es ist daher eine Aufgabe der Erfindung, ein Schnittstelleninterface zum Bereitstellen einer Schnittstelle in einem Kraftfahrzeug bereit zu stellen, die sich nicht auf das Auslesen von Diagnosedaten aus dem Kraftfahrzeug beschränkt und die dabei höheren Sicherheitsanforderungen gerecht wird.

Es ist insbesondere eine Aufgabe der Erfindung, ein Schnittstelleninterface zum Bereitstellen einer Schnittstelle in einem Kraftfahrzeug bereit zu stellen, die bei analoger Anwendung der ISO26262 mindestens ASIL-A entspricht.

### Offenbarung der Erfindung

Gemäß einem Ausführungsbeispiel der Erfindung umfasst ein Schnittstelleninterface zum Bereitstellen einer sicheren Schnittstelle zu einem Kraftfahrzeug, insbesondere zur Kommunikation mit einer Steuerelektronik des Kraftfahrzeugs: eine erste Schnittstelle mit mehreren Anschlüssen, die zur Kommunikation mit einer Steuerelektronik des Kraftfahrzeugs ausgebildet ist; eine zweite Schnittstelle, die zur Kommunikation mit einem externen Diagnosegerät ausgebildet ist; und eine erste Recheneinheit, die ausgebildet ist, Daten zwischen der ersten und der zweiten Schnittstelle zu übertragen. Daten können dabei in beiden Richtungen übertragen werden. Beispielsweise können Diagnosedaten von der ersten Schnittstelle (dem Kraftfahrzeug) an die zweite Schnittstelle (das Diagnosegerät) übertragen werden und/oder Befehle können von der zweiten Schnittstelle (dem Diagnosegerät) an die erste Schnittstelle (das Kraftfahrzeug).

Das Schnittstelleninterface hat darüber hinaus eine zweite Recheneinheit, die dazu ausgebildet ist, die Datenübertragung zwischen der ersten und der zweiten Schnittstelle zu überwachen, eine unerlaubte Datenübertragung zu erkennen, und die Datenübertragung zu unterbrechen, wenn eine unerlaubte Datenübertragung erkannt worden ist; und einen Schaltkreis, der er es ermöglicht, einzelne Anschlüsse der ersten Schnittstelle wahlweise mit Ein- und/oder Ausgängen der ersten Recheneinheit und/oder der zweiten Recheneinheit zu verbinden.

In einem Schnittstelleninterface gemäß einem Ausführungsbeispiel der Erfindung hat die zweite Recheneinheit eine "Maskenfunktion": Die zweite Recheneinheit führt unabhängig von der ersten Recheneinheit Verfahren zur Fehlererkennung und Plausibilisierung durch, die es ermöglichen, die zu übertragenen Daten auf nicht erlaubte Inhalte zu überprüfen und ggf. zu verhindern, dass solche nicht erlaubten Inhalte an das Kraftfahrzeug übertragen werden. Auf diese Weise kann ein hohes Sicherheitsniveau, das bei analoger Anwendung der ISO26262 mindestens ASIL-A entspricht, realisiert werden.

In einer Ausführungsform umfasst der Schaltkreis eine Schaltmatrix, die es ermöglicht, die Ein- und Ausgänge der ersten Recheneinheit wahlweise mit verschiedenen Anschlüssen (Pins) der ersten Schnittstelle zu verbinden. Auf diese Weise kann die Funktion der Schnittstelle variabel an verschiedene Anwendungen angepasst werden.

In einer Ausführungsform ist der Schaltkreis als "Anwendungsspezifische Integrierte Schaltung (ASIC)" ausgebildet. Auf diese Weisen kann der Schaltkreis besonders effizient, platzsparend und kostengünstig realisiert werden.

In einer Ausführungsform weist der Schaltkreis wenigstens ein Receiver-Modul auf, das es ermöglicht, Signale, die über die erste Schnittstelle an das Kraftfahrzeug übertragen werden (sollen), auch an die zweite Recheneinheit zu übertragen, so dass die zweite Recheneinheit die zu übertragenen Signale unabhängig von der ersten Recheneinheit verifizieren und die Datenübertragung unterbrechen kann, wenn eine nicht zulässige Datenübertragung festgestellt wird.

In einer Ausführungsform sind die erste Recheneinheit und die zweite Recheneinheit in einem gemeinsamen Dual-Core-Prozessor ausgebildet. Auf diese Weise können die erste Recheneinheit und die zweite Recheneinheit besonders platzsparend und kostengünstig zur Verfügung gestellt werden.

In einer Ausführungsform weist das Schnittstelleninterface, insbesondere der Schaltkreis, wenigstens ein Watch-Dog-Modul auf, das ausgebildet ist, den Betrieb der ersten Recheneinheit und/oder der zweiten Recheneinheit zu überwachen und das Schnittstelleninterface zu deaktivieren, wenn eine Fehlfunktion der ersten Recheneinheit und/ oder der zweiten Recheneinheit festgestellt wird. Durch den Einsatz eines solchen Watch-Dog-Moduls kann die Betriebssicherheit des Schnittstelleninterface noch weiter erhöht werden.

In einer Ausführungsform weist der Schaltkreis einen Abschaltkreis auf, der es ermöglicht, das Schnittstelleninterface in kurzer Zeit zu deaktivieren, um eine weitere Übertragung von Daten durch das Schnittstelleninterface zu verhindern. Auf diese Weise kann eine nicht zulässige Datenübertragung schnell und zuverlässig abgebrochen werden.

In einer Ausführungsform umfasst der Abschaltkreis einen in Hardware ausgebildeter Abschaltpfad zwischen der zweiten Recheneinheit und dem Watch-Dog. Auf diese Weise kann die Datenübertragung von der zweiten Recheneinheit besonders schnell und zuverlässig abgebrochen werden.

In einer Ausführungsform ist der Schaltkreis ausgebildet, Daten über den aktuellen Zustand des Kraftfahrzeugs, insbesondere seinen aktuellen Bewegungszustand, zu empfangen. Dies ermöglicht es, die Übertragung von Daten von dem Kraftfahrzeug bzw. an das Kraftfahrzeug in Abhängigkeit vom aktuellen Zustand des Kraftfahrzeugs zu erlauben oder zu verhindern.

Dazu kann die elektronische Schaltung insbesondere ein Kraftfahrzeugzustand-Erkennungsmodul aufweisen, das ausgebildet ist, von externen Sensoren Informationen über den aktuellen Zustand des Kraftfahrzeugs zu erhalten und diese Informationen dem Schaltkreis, insbesondere der zweiten Recheneinheit, zur Verfügung zu stellen. Die Übertragung der Daten von dem Kraftfahrzeugzustand-Erkennungsmodul an die zweiten Recheneinheit kann dabei insbesondere über korrespondierende SPI-Module erfolgen.

In einer Ausführungsform ist das Schnittstelleninterface als OBD-Dongle ausgebildet. Dabei ist die erste Schnittstelle zur Kommunikation mit der OBD/OBD2-Schnittstelle eines Kraftfahrzeugs ausgebildet. Auf diese Weise kann das Schnittstelleninterface auf einfache Weise zum Datenaustausch mit der Elektronik jedes Kraftfahrzeugs, das über eine OBD/OBD2-Schnittstelle verfügt, insbesondere mit dessen Steuergerät, verbunden werden.

Über geeignete Adapter kann die Erfindung auch in Kombination mit älteren Legacy-Schnittstellen eingesetzt werden.

### Kurze Beschreibung der Figuren

Figur 1 zeigt ein schematisches Blockschaltbild eines Schnittstelleninterface 2 gemäß einem ersten Ausführungsbeispiel der Erfindung.
Figur 2 zeigt ein schematisches Blockschaltbild eines Schnittstelleninterface 2 gemäß einem zweiten Ausführungsbeispiel der Erfindung.

### Figurenbeschreibung

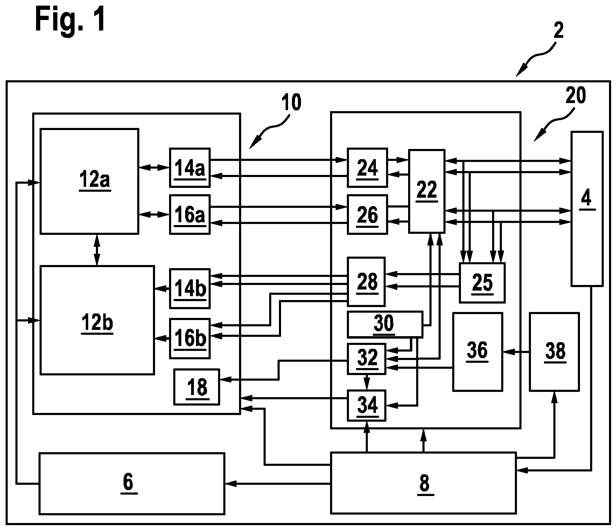

Figur 1 zeigt ein schematisches Blockschaltbild eines Schnittstelleninterface 2 gemäß einem ersten Ausführungsbeispiel der Erfindung.

Das Schnittstelleninterface 2 umfasst eine erste Schnittstelle 4, die zur Kommunikation mit einer Steuerelektronik eines (in der Figur nicht gezeigten) Kraftfahrzeugs ausgebildet ist. Die Steuerelektronik kann insbesondere ein oder mehrere Steuergeräte umfassen. Die erste Schnittstelle 4 kann insbesondere als OBD bzw. OBD2-Schnittstelle ausgebildet sein, um mit einem oder mehreren Steuergeräten des Kraftfahrzeugs zu kommunizieren.

Das Schnittstelleninterface 2 umfasst darüber hinaus eine zweite Schnittstelle 6, die zur Kommunikation mit einem (nicht gezeigten) externen Diagnosegerät ausgebildet ist. Das externe Diagnosegerät kann ein speziell zur Kraftfahrzeug-Diagnose ausgebildetes Gerät oder ein Computer, Tablet-Computer oder Mobiltelefon (Smartphone) sein, auf dem eine zur Kraftfahrzeug-Diagnose geeignete Software ("App") installiert ist.

Die Datenübertragung über die zweite Schnittstelle 6 an das externe Diagnosegerät kann insbesondere drahtgebunden oder drahtlos (z.B. über WLAN, Bluetooth® oder eine ähnliche Technologie) erfolgen.

Ein Energieversorgungsmodul 8 versorgt alle Komponenten des Schnittstelleninterface 2 mit elektrischer Energie.

Das Schnittstelleninterface 2 umfasst auch eine erste Recheneinheit 12a und eine zweite Recheneinheit 12b, die in dem gezeigten Ausführungsbeispiel als zwei Prozessorkerne 12a, 12b eines Dual-Core-Prozessors 10 ausgebildet sind. Alternativ können die erste und die zweite Recheneinheit 12a, 12b als separate Prozessoren ausgebildet sein.

Das Schnittstelleninterface 2 umfasst darüber hinaus eine elektrische Schaltung 20, welche die erste Recheneinheit 12a und die zweite Recheneinheit 12a mit der ersten Schnittstelle 4 verbindet. Der Schaltkreis 20 kann insbesondere als "Anwendungsspezifische Integrierte Schaltung (ASIC)" ausgebildet sein.

Die erste und die zweite Recheneinheit 12a, 12b weisen dazu jeweils zwei Kommunikations-Controller 14a, 14b, 16a, 16b auf, die redundant und unabhängig voneinander ausgebildet sind. Die Kommunikation-Controller 14a, 14b, 16a, 16b können insbesondere als CAN-Controller 14a, 14b und als UARTS-Controller 16a, 16b ausgebildet sein.

Die elektronische Schaltung 20 weist jeweils einen CAN-Transceiver 24 und einen UART-Transceiver 26 auf, die jeweils zur Kommunikation mit dem CAN-Controller und dem UART-Controller 16a der ersten Recheneinheit 12a ausgebildet sind, um auf diese Weise eine Kommunikation zwischen der ersten Recheneinheit 12a und der elektronischen Schaltung 20 zu ermöglichen.

Zwischen dem CAN-Transceiver 24, dem UART-Transceiver 26 und der ersten Schnittstelle 4 ist als Teil des Schaltkreises 20 eine sogenannte Schaltmatrix ("Switch-Matrix") 22 vorgesehen, die es ermöglicht, die Ein- und Ausgänge des CAN-Transceivers 24 und des UART-Transceivers 26 wahlweise mit unterschiedlichen Anschlüssen (Pins) der ersten Schnittstelle 4 zu verbinden.

In dem in der Figur 1 gezeigten ersten Ausführungsbeispiel werden die über die erste Schnittstelle 4 übertragenen Signale zwischen der Schaltmatrix 22 und der ersten Schnittstelle 4 auf dem Physical Layer abgegriffen, von einem Pegelwandler 25 auf den Logic-Level überführt und über ein Receiver-Modul 28, das zur Kommunikation mit dem zweiten CAN-Controller 14b und mit dem zweiten UARTS-Controller 16b ausgebildet ist, der zweiten Recheneinheit 12b zugeführt.

Die elektronische Schaltung 20 weist darüber hinaus ein SPI-Modul 32 und ein Kraftfahrzeugzustand-Erkennungsmodul 36 auf. Das Kraftfahrzeugzustand-Erkennungsmodul 36 ist ausgebildet, von externen Sensoren 38, beispielsweise Beschleunigungs- und/oder Geschwindigkeitssensoren, Informationen über den aktuellen (Fahr-)Zustand des Kraftfahrzeugs zu erhalten und diese Informationen der zweiten Recheneinheit 12b über das SPI-Modul 32 des Schaltkreises 20 und ein korrespondierendes SPI-Modul 18, das mit der zweiten Recheneinheit 12b verbunden ist, zur Verfügung zu stellen.

Das Übermittlung von Daten des aktuellen Kraftfahrzeugzustandes ermöglicht es, in Abhängigkeit vom Kraftfahrzeugtyp, der beispielsweise durch Einlesen der Fahrzeug-Identifizierungsnummer (FIB oder VIN) ermittelt wird, der aktuellen Geschwindigkeit des Kraftfahrzeugs (v = 0 km/h oder v > 0 km/h), der aktuellen Position des Kraftfahrzeugs, die beispielsweise auf der Grundlage von GPS-Daten ermittelt werden kann, um festzustellen ob sich das Kraftfahrzeug z.B. in der Werkstatt befindet, die Übermittlung unterschiedlicher Daten, die Befehle und Botschaften enthalten können, freizuschalten oder zu blockieren. Beispielsweise dürfen Befehle und Botschaften, die Tests von Aktuatoren initiieren, nur übertragen werden, wenn sich das Kraftfahrzeug in einem sicheren Zustand, insbesondere im Stillstand befindet.

Ein Watch-Dog-Modul 30 überwacht den Betrieb der ersten und der zweiten Recheneinheit 12a, 12b sowie der elektronischen Schaltung 20 und deaktiviert das Schnittstelleninterface 2 und/oder führt durch Ansteuern eines Reset-Moduls 34 dessen Neustart durch, wenn eine Fehlfunktion einer der überwachten Komponenten festgestellt wird.

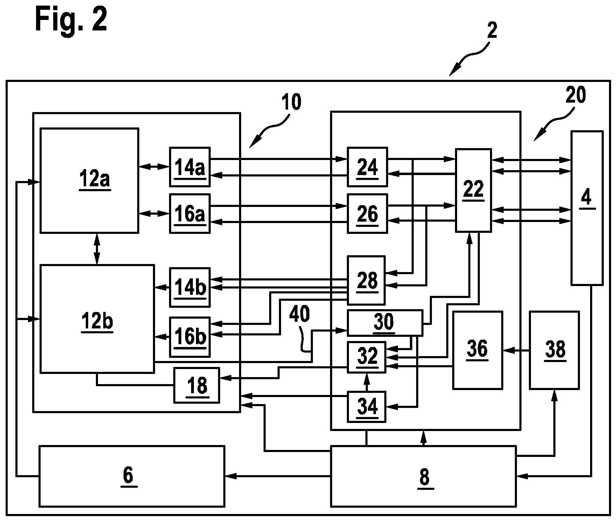

Figur 2 zeigt ein schematisches Blockschaltbild eines Schnittstelleninterface 2 gemäß einem zweiten Ausführungsbeispiel der Erfindung.

Diejenigen Komponenten des zweiten Ausführungsbeispiels, die den Komponenten des ersten Ausführungsbeispiels entsprechen, sind mit den gleichen Bezugszeichen bezeichnet und werden nicht erneut im Detail beschrieben.

Während im ersten Ausführungsbeispiel die Signale auf Basis des Physical Layer direkt an den physikalischen Anschlüssen (Pins) der ersten Schnittstelle 4 abgegriffen werden, werden die Signale im zweiten Ausführungsbeispiel auf dem Logic-Level innerhalb des Schaltkreises 20, insbesondere zwischen dem CAN-Transceiver 24 / dem UART-Transceiver 26 und der Schaltmatrix 22, abgegriffen.

Auf einen Pegelwandler 25, wie er im ersten Ausführungsbeispiel vorgesehen ist, um die Signale vom Physical Layer auf das Logic-Level zu überführen, kann daher verzichtet werden.

Im zweiten Ausführungsbeispiel ist zusätzlich zwischen der zweiten Recheneinheit 12b und dem Watch-Dog 30 ein in Hardware ausgebildeter Abschaltpfad 40 vorgesehen. Der Abschaltpfad 40 ermöglicht es der zweiten Recheneinheit 12b, direkt mit dem Watch-Dog 30 zu kommunizieren, um die Datenübertragung über die erste Schnittstelle 4 bei Bedarf sehr schnell zu unterbrechen.

Verschiedene Mechanismen der Fehlererkennung und Plausibilisierung, die im Folgenden beispielhaft und nicht abschließend beschrieben werden, ermöglichen es, die zu übertragenen Daten auf nicht erlaubte Inhalte zu überprüfen und ggf. zu verhindern, dass solche nicht erlaubten Inhalte übertragen werden.

Die über die erste Schnittstelle 4 zu übertragenen Daten werden vor (2. Ausführungsbeispiel) oder hinter (1. Ausführungsbeispiel) der Schaltmatrix 22 abgegriffen und zur Verifikation (ggf. nach Überführung auf das Logik-Level durch den Pegelwandler 25) über das Receiver-Modul 28 der zweiten Recheneinheit 12b zugeführt.

Die zweite Recheneinheit 12b ist in der Lage, nicht erlaubte Diagnosedaten zu erkennen und die Übertragung der Daten über die erste Schnittstelle 4 an das Kraftfahrzeug unterbrechen. Dafür stehe verschiedene Möglichkeiten zur Verfügung, die alternativ oder kumulativ implementiert werden können.

Die zweite Recheneinheit 12b kann, nachdem die nicht erlaubte Diagnosedaten erkannt hat, dem Watchdog 30 bewusst falsche Antworten geben, um zu bewirken, dass der Watchdog 30 die weitere Übertragung von Daten unterbindet, z.B. indem die Schaltmatrix 22 hochohmig geschaltet wird.

In dem zweiten, in der Figur 2 gezeigten Ausführungsbeispiel, kann die zweite Recheneinheit 12b die Schaltmatrix 22 über eine direkte Signalleitung 40 zum Watchdog 30, die einen in Hardware ausgebildeten Abschaltpfad zur Verfügung stellt, hochohmig schalten, um die Datenübertragung über die erste Schnittstelle 4 zu unterbrechen.

Eine Möglichkeit, die Datenübertragung zu unterbrechen, besteht darin, dass die zweite Recheneinheit 12b die erste Recheneinheit 12a auffordert, die Übertragung von Daten über die erste Schnittstelle 4 zu unterbrechen.

Beispielsweise kann die zweite Recheneinheit 12b eine HS-CAN-Kommunikation nach dem zehnten CRC-Prüfsummenbit unterbrechen, wenn die Daten als nicht erlaubt eingestuft worden sind. Daraufhin wird das Steuergerät des Kraftfahrzeugs die Daten aufgrund eines ungültigen CRCs ignorieren.

In allen Fällen ist der Abschaltpfad insbesondere derart ausgelegt, dass er innerhalb eines kurzen Zeitfensters von beispielsweise 20µs aktiviert werden kann.

Beispielsweise erzeugt die zweite Recheneinheit 12b mach einer Fehlererkennung über einen Request von der zweiten Recheneinheit 12b an die der erste Recheneinheit 12a zusätzlich einen Error-Frame auf dem CAN-Bus, bevor die Schaltmatrix 22 deaktiviert / hochohmig geschaltet wird.

Da die zweite Recheneinheit 12b über die Schaltmatrix 22 und das Receiver-Modul 28 ebenfalls die zu übertragene Daten erhält, kann die zweite Recheneinheit 12b nicht nur den Inhalt der CAN- Daten auf Gültigkeit prüfen, sondern auch eine Plausibilisierung der Erzeugung der Daten in der ersten Recheneinheit 12a durchführen ("Komme ich auf das gleiche Ergebnis wie die erste Recheneinheit 12a?"), und ein Unterbrechen der Datenübertragung bewirken, wenn diese Plausibilisierung zu einem negativen Ergebnis führt.

Um die Rechenoperationen der ersten Recheneinheit 12a zu überprüfen, kann die erste Recheneinheit 12a die an das Kraftfahrzeug zu übermittelnden Daten zur Verifikation an die zweite Recheneinheit 12b übertragen, noch bevor die Botschaft an die elektronische Schaltung 20 übertragen wird. Erst wenn die zweite Recheneinheit 12b die Daten positiv verifiziert und bestätigt hat, werden die Daten von der ersten Recheneinheit 12a freigegeben und an die elektronische Schaltung 20 übertragen. Zusätzlich kann die zweite Recheneinheit 12b die elektronische Schaltung 20 über den direkten Abschaltpfad 40 schnell deaktivieren.

Zur Verifikation des Übertragungspfades von der ersten Recheneinheit 12a an Teilmodule der elektronischen Schaltung 20 kann die zweite Recheneinheit 12b zusätzliche Daten in die erste Recheneinheit 12a einspeisen und über die elektronische Schaltung 20 zurücklesen. Darüber hinaus kann mit dieser Anordnung der Funktionalität des Überwachungspfades sowie des Abschaltpfades 40 überprüft werden.

Die Funktion der zweiten Recheneinheit 12b kann durch eine unabhängige Hardware in der elektronischen Schaltung 20, beispielsweise einen Watchdog 30, der eine Frage-/Antwort-Sequenz durchführt, verifiziert werden. Wird von der zweiten Recheneinheit 12b eine falsche Antwort gegeben oder erfolgt die Antwort nicht innerhalb eines vorgegebenen Zeitfensters, wird ein Fehlerzähler hochgezählt. Der Fehlerzähler wird herabgezählt (dekrementiert), wenn im vorgegebenen Zeitfenster eine richtige Antwort gegeben wird.

Erreicht der Fehlerzähler einen vorgegebenen Wert, wird die weitere Datenübertragung unterbrochen, insbesondere indem die Schaltmatrix 22 hochohmig geschaltet wird, so dass über die erste Schnittstelle 33 keine Signale von dem Schnittstelleninterface 2 an das Kraftfahrzeug übertragen werden können. Darüber hinaus kann das Reset Modul aktiviert 34 werden, um das Schnittstelleninterface 2 zurückzusetzen.

Die Funktionalität der Frage-/Antwort-Sequenz wird von der zweiten Recheneinheit 12b periodisch verifiziert, indem bewusst falsche Antworten und/oder richtige Antworten außerhalb des Zeitfensters gegeben werden. Das Hinauf- und Herabzählen des Fehlerzählers wird dabei von der zweiten Recheneinheit 12b überwacht.

Wenn die zweite Recheneinheit 12b, wie im zweiten Ausführungsbeispiel, einen direkten Durchgriff auf den Abschaltpfad 40 des Watchdog 30 hat, kann das Frage-Antwort-Spiel zur Verifikation des Funktionalität der ersten Recheneinheit 12a und/oder der zweiten Recheneinheit 12b auch direkt zwischen der ersten Recheneinheit 12a und der zweiten Recheneinheit 12b durchführt werden.

## Patentansprüche

1. Schnittstelleninterface (2) zum Bereitstellen einer sicheren Schnittstelle zu einem Kraftfahrzeug, insbesondere zur Kommunikation mit einer Steuerelektronik des Kraftfahrzeugs, wobei das Schnittstelleninterface (2) aufweist:
eine erste Schnittstelle (4) mit mehreren Anschlüssen, die zur Kommunikation mit einer Steuerelektronik des Kraftfahrzeugs ausgebildet ist;
eine zweite Schnittstelle (6), die zur Kommunikation mit einem externen Diagnosegerät ausgebildet ist;
eine erste Recheneinheit (12a), die ausgebildet ist, Daten zwischen der ersten und der zweiten Schnittstelle (6) zu übertragen;
eine zweite Recheneinheit (12b), die dazu ausgebildet ist, die Datenübertragung zwischen der ersten Schnittstelle (4) und der zweiten Schnittstelle (6) zu überwachen, um eine unerlaubte Datenübertragung zu erkennen, und die Datenübertragung zu unterbrechen, wenn eine unerlaubte Datenübertragung erkannt worden ist; und
einen Schaltkreis (20), der er es ermöglicht, Anschlüsse der ersten Schnittstelle wahlweise mit Ein- und/oder Ausgängen der ersten Recheneinheit (12a) und/oder der zweiten Recheneinheit (12b) zu verbinden, **dadurch gekennzeichnet, dass** abhängig von der aktuellen geographischen Position des Kraftfahrzeugs, die beispielsweise auf der Grundlage von GPS-Daten ermittelt werden kann, die Übermittlung unterschiedlicher Daten, die Befehle und Botschaften enthalten, freigeschaltet oder blockiert wird.

2. Schnittstelleninterface (2) nach Anspruch 1, wobei der Schaltkreis (20) eine Schaltmatrix (22) umfasst.

3. Schnittstelleninterface (2) nach Anspruch 1 oder 2, wobei der Schaltkreis (20) als ASIC ausgebildet ist.

4. Schnittstelleninterface (2) nach einem der vorangehenden Ansprüche, wobei der Schaltkreis (20) wenigstens ein Receiver-Modul (28) aufweist, das es ermöglicht, Signale, die über die erste Schnittstelle (4) an das Kraftfahrzeug übertragen werden, auch an die zweite Recheneinheit (12b) zu übertragen.

5. Schnittstelleninterface (2) nach einem der vorangehenden Ansprüche, wobei die erste Recheneinheit (12a) und die zweite Recheneinheit (12b) in einem gemeinsamen Prozessor (10) ausgebildet sind.

6. Schnittstelleninterface (2) nach einem der vorangehenden Ansprüche, wobei der Schaltkreis (20) wenigstens ein Watch-Dog-Modul (30) aufweist, das ausgebildet ist, den Betrieb der ersten Recheneinheit (12a), der zweiten Recheneinheit (12b) und/oder des Schaltkreises (20) zu überwachen und das Schnittstelleninterface (2) zu deaktivieren, wenn eine Fehlfunktion der zweiten Recheneinheit (12b) und/oder des Schaltkreises (20) festgestellt wird.

7. Schnittstelleninterface (2) nach einem der vorangehenden Ansprüche, wobei der Schaltkreis (20) einen Abschaltkreis (40) aufweist, der es ermöglicht das Schnittstelleninterface (2) schnell zu deaktivieren und eine weitere Übertragung von Daten durch das Schnittstelleninterface (2) zu verhindern.

8. Schnittstelleninterface (2) nach Anspruch 7, wobei der Abschaltkreis (40) einen in Hardware ausgebildeter Abschaltpfad zwischen der zweiten Recheneinheit (12b) und dem Watch-Dog (30) umfasst.

9. Schnittstelleninterface (2) nach einem der vorangehenden Ansprüche, wobei der Schaltkreis (20) ausgebildet ist, Daten über den aktuellen Zustand des Kraftfahrzeugs, insbesondere seinen Bewegungszustand, zu empfangen.

10. Schnittstelleninterface (2) nach Anspruch 9, wobei die elektronische Schaltung (20) ein Kraftfahrzeugzustand-Erkennungsmodul (36) aufweist, das ausgebildet ist, von externen Sensoren (38) Informationen über den aktuellen Zustand des Kraftfahrzeugs zu erhalten und diese Informationen dem Schaltkreis, insbesondere der zweiten Recheneinheit (12b), zur Verfügung zu stellen.

11. Schnittstelleninterface (2) nach einem der vorangehenden Ansprüche, wobei das Schnittstelleninterface (2) als OBD-Dongle und die erste Schnittstelle (4) zur Kommunikation mit der OBD/OBD2-Schnittstelle des Kraftfahrzeugs ausgebildet ist.

## Claims

1. Interface (2) for providing a secure interface to a motor vehicle, in particular for communication with control electronics of the motor vehicle, wherein the interface (2) has:
a first interface (4) having multiple connections, which is designed for communication with control electronics of the motor vehicle;
a second interface (6), which is designed for communication with an external diagnosis device;
a first computing unit (12a), which is designed to transmit data between the first and second interfaces (6) ;
a second computing unit (12b), which is designed to monitor the data transmission between the first interface (4) and the second interface (6) in order to detect an illegal data transmission, and to interrupt the data transmission if an illegal data transmission has been detected; and
a circuit (20), which allows connections of the first interface to be selectively connected to inputs and/or outputs of the first computing unit (12a) and/or of the second computing unit (12b), **characterized in that** the present geographical position of the motor vehicle, which can be ascertained on the basis of GPS data, for example, is taken as a basis for enabling or blocking the transmission of different data containing commands and messages.

2. Interface (2) according to Claim 1, wherein the circuit (20) comprises a switching matrix (22).

3. Interface (2) according to Claim 1 or 2, wherein the circuit (20) is in the form of an ASIC.

4. Interface (2) according to one of the preceding claims, wherein the circuit (20) has at least one receiver module (28), which allows signals transmitted to the motor vehicle via the first interface (4) to be also transmitted to the second computing unit (12b).

5. Interface (2) according to one of the preceding claims, wherein the first computing unit (12a) and the second computing unit (12b) are formed in a common processor (10).

6. Interface (2) according to one of the preceding claims, wherein the circuit (20) has at least one watchdog module (30), which is designed to monitor the operation of the first computing unit (12a), the second computing unit (12b) and/or the circuit (20) and to deactivate the interface (2) if a malfunction in the second computing unit (12b) and/or the circuit (20) is detected.

7. Interface (2) according to one of the preceding claims, wherein the circuit (20) has a shutdown loop (40), which allows the interface (2) to be quickly deactivated and a further transmission of data by the interface (2) to be prevented.

8. Interface (2) according to Claim 7, wherein the shutdown loop (40) comprises a shutdown path in the form of hardware between the second computing unit (12b) and the watchdog (30).

9. Interface (2) according to one of the preceding claims, wherein the circuit (20) is designed to receive data about the present state of the motor vehicle, in particular its state of motion.

10. Interface (2) according to Claim 9, wherein the electronic circuit (20) has a motor vehicle state detection module (36), which is designed to receive information about the present state of the motor vehicle from external sensors (38) and to make this information available to the circuit, in particular to the second computing unit (12b).

11. Interface (2) according to one of the preceding claims, wherein the interface (2) is in the form of an OBD dongle and the first interface (4) is designed for communication with the OBD/OBD2 interface of the motor vehicle.

## Revendications

1. Jonction d'interface (2) destinée à mettre à disposition une interface sécurisée vers un véhicule automobile, notamment destinée à la communication avec une électronique de commande du véhicule automobile, la jonction d'interface (2) comprenant :
une première interface (4) dotée de plusieurs bornes, qui est configurée pour la communication avec une électronique de commande du véhicule automobile ;
une deuxième interface (6), qui est configurée pour la communication avec un appareil de diagnostic externe ;
une première unité de calcul (12a), qui est configurée pour transmettre des données entre la première et la deuxième interface (6) ;
une deuxième unité de calcul (12b), qui est configurée pour surveiller la transmission de données entre la première interface (4) et la deuxième interface (6) afin de reconnaître une transmission de données non autorisée, et interrompre la transmission de données lorsqu'une transmission de données non autorisée a été reconnue ; et
un circuit de commutation (20), qui permet de relier les bornes de la première interface sélectivement à des entrées et/ou des sorties de la première unité de calcul (12a) et/ou de la deuxième unité de calcul (12b), **caractérisée en ce que** la communication de différentes données, qui contiennent des instructions et des messages, est libérée ou bloquée en fonction de la position géographique actuelle du véhicule automobile, laquelle peut être déterminée sur la base de données GPS, par exemple.

2. Jonction d'interface (2) selon la revendication 1, le circuit de commutation (20) comprenant une matrice de commutation (22).

3. Jonction d'interface (2) selon la revendication 1 ou 2, le circuit de commutation (20) étant réalisé sous la forme d'un ASIC.

4. Jonction d'interface (2) selon l'une des revendications précédentes, le circuit de commutation (20) possédant au moins un module récepteur (28) qui permet de transmettre également à la deuxième unité de calcul (12b) des signaux qui sont transmis au véhicule automobile par le biais de la première interface (4).

5. Jonction d'interface (2) selon l'une des revendications précédentes, la première unité de calcul (12a) et la deuxième unité de calcul (12b) étant formées dans un processeur (10) commun.

6. Jonction d'interface (2) selon l'une des revendications précédentes, le circuit de commutation (20) possédant au moins un module chien de garde (30) qui est configuré pour surveiller le fonctionnement de la première unité de calcul (12a), de la deuxième unité de calcul (12b) et/ou du circuit de commutation (20) et pour désactiver la jonction d'interface (2) lorsqu'un défaut de fonctionnement de la deuxième unité de calcul (12b) et/ou du circuit de commutation (20) est constaté.

7. Jonction d'interface (2) selon l'une des revendications précédentes, le circuit de commutation (20) possédant un circuit de déconnexion (40) qui permet de désactiver rapidement la jonction d'interface (2) et d'empêcher une poursuite de la transmission de données par la jonction d'interface (2).

8. Jonction d'interface (2) selon la revendication 7, le circuit de déconnexion (40) comportant un chemin de déconnexion configuré dans le matériel entre la deuxième unité de calcul (12b) et le chien de garde (30).

9. Jonction d'interface (2) selon l'une des revendications précédentes, le circuit de commutation (20) étant configuré pour recevoir des données à propos de l'état actuel du véhicule automobile, notamment son état de déplacement.

10. Jonction d'interface (2) selon la revendication 9, le circuit électronique (20) possédant un module de reconnaissance d'état de véhicule automobile (36) qui est configuré pour obtenir de la part de capteurs externes (38) des informations à propos de l'état actuel du véhicule automobile et mettre ces informations à la disposition du circuit de commutation, notamment de la deuxième unité de calcul (12b).

11. Jonction d'interface (2) selon l'une des revendications précédentes, la jonction d'interface (2) étant réalisée sous la forme d'un dongle OBD et la première interface (4) étant configurée pour la communication avec l'interface OBD/OBD2 du véhicule automobile.
